# EUROPEAN PATENT APPLICATION

(11) **EP 4 797 503 A1**
(43) Date of publication of application: **26.08.2026**
(21) Application number: 26159666.2
(22) Date of filing: 19.02.2026
(51) Int. Cl.: H02K 1/16, H02K 1/20, H02K 9/19

(54) **STATOR FOR AN ELECTRIC MACHINE**

(30) Priority: 19.02.2025 GB 202502441
(71) Applicant: Hispeed Ltd., Bicester, Oxfordshire OX27 8FZ (GB)
(72) Inventor: Michaelides, Alexandros, Bicester OX278FZ (GB); Cesa, Tiago, Bicester OX278FZ (GB); Thackwell, Cleef, Bicester OX278FZ (GB); Onder, Salih, Bicester OX27 8FZ (GB); Noble, Jamie, Bicester OX27 8FZ (GB)
(74) Representative: Ellis, Richard Andrew

(57) **Abstract**

A stator 10 comprising an inner ring 12 having a cylindrical core centred on a central axis 80 for receiving a rotor 70 in an axial direction along the central axis 80. The inner ring 12 comprises: a first section 136 comprising a plurality of first inner ring slots 20-1, each first inner ring slot 20-1 comprising a winding slot 40, configured to receive windings, and a cooling channel 42, configured for the passage of a cooling fluid in an axial direction, the cooling channel 42 being located between the winding slot 40 and an inner circumference 80 of the inner ring 12, and being separated from the winding slot 40 by a narrowing 44-1 of the first inner ring slot 20-1, the narrowing 44-1 of the first inner ring slot 20-1 being configured to retain the windings inside the winding slot 40; a second section 236, abutting the first section 136, comprising second inner ring slots 20-2, each second inner ring slot 20-2 comprising a widened second inner ring slot formation 46-2 at a radially inner section of the second inner ring slot 20-1; and a third section 336, abutting the second section 236, comprising third inner ring slots 20-3, each third inner ring slot 20-3 comprising a widened third inner ring slot formation 46-3 at a radially inner section of the third inner ring slot 20-1 and a radially thicker formation 16-3 at a radially inner end of the third inner ring slot 20-1 than at a radially inner end of the second inner ring slot 20-2, the radially thicker formation 16-3 at the radially inner end of the third inner ring slot 20-3 forming a sealing surface 350 configured to receive a seal.

## Description

### TECHNICAL FIELD

The present disclosure relates to a stator for an electric machine. In particular, but not exclusively, it relates to a stator for an electric machine used as a propulsion motor and/or generator for a vehicle.

Aspects of the invention relate to a stator, an electric machine, a vehicle, and method of manufacture of a stator.

### BACKGROUND

It is known to provide one or more electric machines in a vehicle to generate a tractive force for propelling the vehicle. Such electric machines may be provided in addition to an internal combustion engine or in place of an internal combustion engine. Such electric machines comprise a stator and a rotor. The stator is the stationary part of the electric machine and may comprise a plurality of stator teeth, between which are slots within which electrical windings are placed.

In some electric machines the slots of the stator are open to the air gap between the stator and the rotor. During manufacture of the electric machine, the open slots allow the windings to be inserted but may cause non-negligible electromagnetic disturbances during operation of the electric machine.

In some electric machines the stator is in two parts, the first part being an inner ring having slots to receive windings which are closed in the direction of the air gap, but open radially outwards for insertion of the windings. During manufacture, once the windings have been inserted into the slots, an outer ring forming a stator yoke is attached around the outside of the inner ring.

Electric machines often require cooling mechanisms to dissipate heat generated during their operation. Such cooling mechanisms may help to improve performance and prolong the lifespan of the electric machines. One common cooling solution involves flooding the winding slots in the stator with a dielectric coolant medium, facilitating direct heat removal from the electric windings. However, retaining the coolant medium to avoid any contact with the rotor presents challenges, notably the need for a robust and cost-effective sealing solution without compromising machine performance throughout its lifecycle.

It is an aim of the present invention to address at least some of the disadvantages associated with the prior art.

### SUMMARY OF THE INVENTION

Aspects and embodiments of the invention provide a stator, an electric machine, a vehicle, and method of manufacture of a stator, as claimed in the appended claims.

According to an aspect of the invention there is provided a stator comprising an inner ring having a cylindrical core centred on a central axis for receiving a rotor in an axial direction along the central axis, the inner ring comprising: a first section comprising a plurality of first inner ring slots, each first inner ring slot comprising a winding slot, configured to receive windings, and a cooling channel, configured for the passage of a cooling fluid in an axial direction, the cooling channel being located between the winding slot and an inner circumference of the inner ring, and being separated from the winding slot by a narrowing of the first inner ring slot, the narrowing of the first inner ring slot being configured to retain the windings inside the winding slot; a second section, abutting the first section, comprising second inner ring slots, each second inner ring slot comprising a widened second inner ring slot formation at a radially inner section of the second inner ring slot; and a third section, abutting the second section, comprising third inner ring slots, each third inner ring slot comprising a widened third inner ring slot formation at a radially inner section of the third inner ring slot and a radially thicker formation at a radially inner end of the third inner ring slot than at a radially inner end of the second inner ring slot, the radially thicker formation at the radially inner end of the third inner ring slot forming a sealing surface configured to receive a seal.

An advantage of the invention is that by providing the third section of the inner ring with a greater radial thickness formation a larger seal interface may be provided for receiving an axial face seal, or axial seal, to aid in axial sealing of the stator to a housing within which the stator is located. This assists to minimise, or prevent, a cooling fluid, for example a dielectric cooling medium, oil or other liquid coolant medium, which is used to cool the stator and which is passed through the slots of the stator, from impinging on the rotor or other components of the electric machine other than the stator. In order to facilitate the flow of cooling fluid through the slots of the stator whilst maintaining the large seal interface at the axial end of the stator, the widening of the slots of the second section and third section, allow the cooling fluid to flow around the windings in the slots whilst being able to pass unhindered through to the cooling channel apertures in the first section.

The stator may comprise a central portion formed of the first section, with a second section at each axial end of the first section and a third section at the axially outer ends of each of the second sections.

The inner ring may be formed of a plurality of inner ring lamina stacked along the central axis. The plurality of inner ring lamina may comprise: a plurality of first inner ring lamina forming the first section, wherein each of the first inner ring lamina may comprise a plurality of radially projecting first inner ring lamina teeth, wherein each first inner ring lamina tooth may be connected to adjacent first inner ring lamina teeth by respective first inner ring lamina material bridges at radially inner ends of the first inner ring lamina teeth, and may be separated from the adjacent first inner ring lamina teeth by respective first inner ring lamina slots, wherein the first inner ring lamina slots may each comprise a winding slot aperture and a cooling channel aperture, wherein the cooling channel aperture may be located between the winding slot aperture and an inner circumference of the first inner ring lamina, and may be separated from the winding slot aperture by a narrowing of the first inner ring lamina slot.

The plurality of inner ring lamina may comprise: a plurality of second inner ring lamina forming the second section, wherein each of the second inner ring lamina may comprise a plurality of radially projecting second inner ring lamina teeth, wherein each second inner ring lamina tooth may be connected to adjacent second inner ring lamina teeth by respective second inner ring lamina material bridges at radially inner ends of the second inner ring lamina teeth, and may be separated from the adjacent second inner ring lamina teeth by respective second inner ring lamina slots, wherein the second inner ring lamina slots may each comprise a widened second inner ring lamina slot formation proximal to the respective second inner ring lamina material bridge.

The plurality of inner ring lamina may comprise: a plurality of third inner ring lamina forming the third section, wherein each of the third inner ring lamina may comprise a plurality of radially projecting third inner ring lamina teeth, wherein each third inner ring lamina tooth may be connected to adjacent third inner ring lamina teeth by respective third inner ring lamina material bridges at radially inner ends of the third inner ring lamina teeth, and may be separated from the adjacent third inner ring lamina teeth by respective third inner ring lamina slots, wherein the third inner ring lamina material bridge may be of greater radial thickness than the second inner ring lamina material bridge, and wherein the third inner ring lamina slots may each comprise a widened third inner ring lamina slot formation proximal to the respective third inner ring lamina material bridge.

The stator may comprise a central portion formed of the plurality of first inner ring lamina, with a plurality of second inner ring lamina at each axial end of the plurality of first inner ring lamina and a plurality of third inner ring lamina at the axially outer ends of each of the plurality of second inner ring lamina.

An advantage of the invention is that by providing the third inner ring lamina with greater radial thickness material bridges a larger seal interface is provided for receiving an axial face seal, or axial seal, to aid in axial sealing of the stator to a housing within which the stator is located. This assists to minimise, or prevent, a cooling fluid, for example a dielectric cooling medium, oil or other liquid coolant medium, which is used to cool the stator and which is passed through the slots of the stator, from impinging on the rotor or other components of the electric machine other than the stator. In order to facilitate the flow of cooling fluid through the slots of the stator whilst maintaining the large seal interface at the axial end of the stator, the widening of the slots of the plurality of second inner ring lamina and plurality of third inner ring lamina, allow the cooling fluid to flow around the windings in the slots whilst being able to pass unhindered through to the cooling channel apertures in the plurality of first inner ring lamina.

At least a portion of each of the radially projecting first inner ring lamina teeth of the plurality of first inner ring lamina, may overlay a portion of a respective radially projecting second inner ring lamina tooth of the plurality of second inner ring lamina, and may overlay a portion of a respective radially projecting third inner ring lamina tooth of the plurality of third inner ring lamina to form axially extending stator winding slots and corresponding axially extending teeth of the inner ring.

The stator may comprise an outer ring formed of a plurality of outer ring lamina stacked along an axial direction of the stator to form an outer ring, the outer ring located at radially outer ends of the axially extending teeth of the inner ring.

The radially extending thickness of the plurality of second inner ring lamina material bridges may be of the same, or substantially the same, radially extending thickness as the plurality of first inner ring lamina material bridges.

The widened second inner ring lamina slot formations may extend circumferentially such that the plurality of second inner ring lamina slot formations may be wider than the cooling channel aperture of the plurality of first inner ring lamina proximal to the respective first inner ring lamina material bridges and second inner ring lamina material bridges.

The widened second inner ring lamina slot formations of the plurality of second inner ring lamina may extend from the second inner ring lamina material bridges to a location radially outward of the narrowing of the first inner ring lamina slots of the plurality of first inner ring lamina.

The widened third inner ring lamina slot formations of the plurality of third inner ring lamina may extend from a location radially outward of the second inner ring lamina material bridges to a location radially outward of the narrowing of the first inner ring lamina slots.

According to an aspect of the invention there is provided an electric machine comprising a stator according to any previous aspect and a rotor.

According to an aspect of the invention there is provided a vehicle comprising one or more electric machines according to any preceding aspect.

According to an aspect of the invention there is provided a method of manufacture of a stator, comprising: forming a first section of the inner ring of the stator, the first section comprising a plurality of first inner ring slots, each first inner ring slot comprising a winding slot, configured to receive windings, and a cooling channel, configured for the passage of a cooling fluid in an axial direction, the cooling channel being located between the winding slot and an inner circumference of the inner ring, and being separated from the winding slot by a narrowing of the first inner ring slot, the narrowing of the first inner ring slot being configured to retain the windings inside the winding slot; forming two second sections of the inner ring of the stator, each second section comprising second inner ring slots, each second inner ring slot comprising a widened second inner ring slot formation at a radially inner section of the second inner ring slot; forming two third section of the inner ring of the stator, each third section comprising third inner ring slots, each third inner ring slot comprising a widened third inner ring slot formation at a radially inner section of the third inner ring slot and a radially thicker formation at a radially inner end of the third inner ring slot than at a radially inner end of the second inner ring slot, the radially thicker formation at the radially inner end of the third inner ring slot forming a sealing surface configured to receive a seal; abutting a first second section at a first axial end of the first section and abutting a second second section at a second axial end of the first section; and abutting a first third section at an axially outer end of the first second section and abutting a second third section at an axially outer end of the second second section.

The method of manufacture of a stator may comprise: stamping a plurality of first inner ring lamina. Each of the first inner ring lamina may comprise a plurality of radially projecting first inner ring lamina teeth, wherein each first inner ring lamina tooth may be connected to adjacent first inner ring lamina teeth by respective first inner ring lamina material bridges at radially inner ends of the first inner ring lamina teeth, and may be separated from the adjacent first inner ring lamina teeth by respective first inner ring lamina slots, wherein the first inner ring lamina slots may each comprise a winding slot aperture and a cooling channel aperture, wherein the cooling channel aperture may be located between the winding slot aperture and an inner circumference of the first inner ring lamina, and may be separated from the winding slot aperture by a narrowing of the first inner ring lamina slot.

The method of manufacture of a stator may comprise: stamping a plurality of second inner ring lamina Each of the second inner ring lamina may comprise a plurality of radially projecting second inner ring lamina teeth, wherein each second inner ring lamina tooth may be connected to adjacent second inner ring lamina teeth by respective second inner ring lamina material bridges at radially inner ends of the second inner ring lamina teeth, and may be separated from the adjacent second inner ring lamina teeth by respective second inner ring lamina slots, wherein the second inner ring lamina slots may each comprise a widened second inner ring lamina slot formation proximal to the respective second inner ring lamina material bridge.

The method of manufacture of a stator may comprise: stamping a plurality of third inner ring lamina Each of the third inner ring lamina may comprise a plurality of radially projecting third inner ring lamina teeth, wherein each third inner ring lamina tooth may be connected to adjacent third inner ring lamina teeth by respective third inner ring lamina material bridges at radially inner ends of the third inner ring lamina teeth, and may be separated from the adjacent third inner ring lamina teeth by respective third inner ring lamina slots, wherein the third inner ring lamina material bridge may be of greater radial thickness than the second inner ring lamina material bridge, and wherein the third inner ring lamina slots may each comprise a widened third inner ring lamina slot formation proximal to the respective third inner ring lamina material bridge.

The method of manufacture of a stator may comprise: stacking the plurality of first inner ring lamina along an axial direction of the stator as a central portion of the stator; stacking a first plurality of second inner ring lamina at a first axial end of the plurality of first inner ring lamina and stacking a second plurality of second inner ring lamina at a second axial end of the plurality of first inner ring lamina; and stacking a first plurality of third inner ring lamina at an axially outer end of the first plurality of second inner ring lamina and stacking a second plurality of third inner ring lamina at an axially outer end of the second plurality of second inner ring lamina.

The method of manufacture of a stator may comprise overlaying at least a portion of each of the radially projecting first inner ring lamina teeth with a portion of a respective radially projecting second inner ring lamina tooth and a portion of a respective radially projecting third inner ring lamina tooth to form axially extending stator winding slots and corresponding axially extending teeth of the inner ring.

The method of manufacture of a stator may comprise stamping a plurality of outer ring lamina, the outer ring lamina configured to be located at the radially outer ends of the teeth of the inner ring.

The method of manufacture of a stator may comprise stamping the plurality of first inner ring lamina, the plurality of second inner ring lamina, and the plurality of third inner ring lamina from sheet steel material. The plurality of first inner ring lamina, the plurality of second inner ring lamina, and the plurality of third inner ring lamina may have circular inner surfaces to form, once stacked along an axial direction of the stator, a central cylindrical core of the stator.

Within the scope of this application, it is expressly intended that the various aspects, embodiments, examples, and alternatives, set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 illustrates a cross-sectional image of an electric machine according to an embodiment of the invention;
Figure 2 illustrates a side view of a stator according to an embodiment of the invention;
Figure 3 illustrates a top view of a lamina of a first subset of lamina of the stator, according to an embodiment of the invention;
Figure 4 illustrates a perspective view of a portion of a first section of the stator, which may be formed of a stack of stator lamina as illustrated in Figure 3, according to an embodiment of the invention;
Figure 5 illustrates a top view of a lamina of a second subset of lamina of the stator, according to an embodiment of the invention;
Figure 6 illustrates a perspective view of a portion of a first and a second section of the stator, which may be respectively formed of a stack of stator lamina comprising lamina as illustrated in Figure 3 and lamina as illustrated in Figure 5, according to an embodiment of the invention;
Figure 7 illustrates a top view of a lamina of a third subset of lamina of the stator, according to an embodiment of the invention;
Figure 8 illustrates a perspective view of a portion of a first, a second, and a third section of the stator, which may be respectively formed of a stack of stator lamina comprising lamina as illustrated in Figure 3, lamina as illustrated in Figure 5, and lamina illustrated in Figure 7, according to an embodiment of the invention;
Figure 9 illustrates a cutaway perspective view of a portion of a first, a second, and a third section of the stator, which may be respectively formed of a stack of stator lamina comprising lamina as illustrated in Figure 3, lamina as illustrated in Figure 5, and lamina as illustrated in Figure 7, according to an embodiment of the invention;
Figure 10 illustrates a vehicle according to an embodiment of the invention; and
Figure 11 is a flow diagram of the manufacturing of a stator according to an embodiment of the invention.

In the drawings, like parts are denoted by like reference numerals.

### DETAILED DESCRIPTION

Examples of the present disclosure relate to a stator. Such a stator may be part of an electric machine which can be used as a propulsion motor and/or generator for a vehicle. In particular, examples of the present disclosure relate to a multi-part stator. Such a multi-part stator may comprise an inner ring and an outer ring, which are intended to be collocated to form a stator with winding slots for receiving electrical windings. Non-limiting examples will now be described with reference to the accompanying drawings.

The figures illustrate a stator 10, electric machine 400, vehicle 500, and a process or method 600 for manufacturing a stator 10. The stator 10 is intended for use in an electric machine 400. Such electric machines 400 may act as a motor, a generator, or both a motor and a generator. In particular, the stator 10 may be intended for use in an electric machine 400 which is suitable for operating as a traction motor of an electric vehicle 500. The electric machine 400 comprises a stationary stator 10 and a moveable rotor 70, where the rotor 70 is configured to rotate in a central cylindrical bore, or central cylindrical core, of the stator 10, around a central axis 80 of the stator 10, to drive a driveshaft of the electric vehicle 500. The rotor 70 is separated from the stator 10 by a small air gap 82. An electric vehicle 500, such as a car, van, truck, motorbike, aeroplane, or any other transportation means, may incorporate one or more of the electric machines 400, in particular to provide motive force for that vehicle 500.

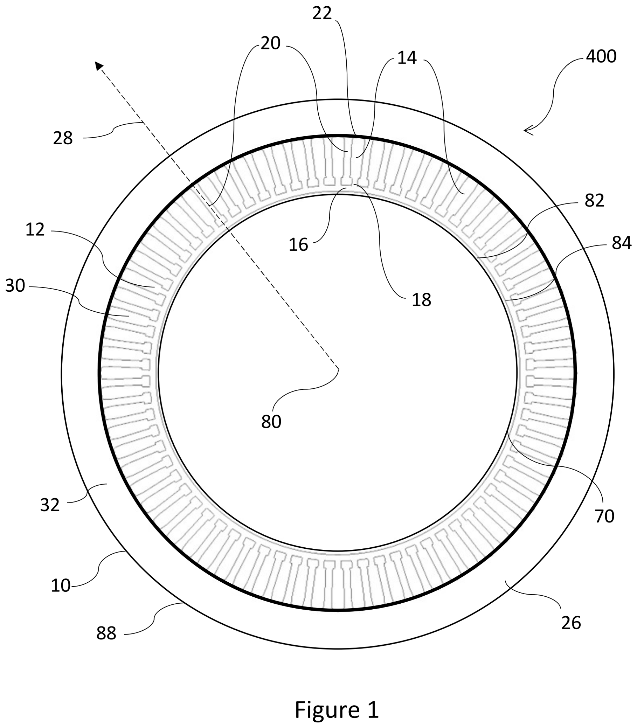

Figure 1 is an illustration of the cross section of an electric machine 400, where the electric machine comprises a rotor 70 and a stator 10. In Figure 1 the stator 10 is in the form of a two-part stator having an inner ring 12 and an outer ring 26.

It will be understood that the outer ring 26 of the stator 10 may take various forms without affecting the operation of the present invention. For example, the outer surface 88 of the outer ring 26 of the stator 10 may be formed to have an oblate form in order to prevent or minimize rotation of the stator 10 within an electric machine housing 402 in which the stator 10 may be located by engaging with an interior of the electric machine housing 402.

In some stator arrangements the outer surface 88 of the stator 10 may comprise features which project from, or into, the outer surface 88 of the stator 10. Such deviations from a circular outer surface 88 may reduce or prevent the possibility of the stator 10 rotating in a stator housing 402, where the stator housing 402 houses the stator 10 and is affixed to a vehicle 500.

In some embodiments, the outer ring 26 may be formed in multiple parts to be connected in an interlocking formation around the inner ring 12.

The inner ring 12 and the outer ring 26 are concentric around a central stator axis 80. The inner ring 12 comprises a plurality of radially projecting teeth 14 and a plurality of radially extending winding slots 20. The teeth 14 and slots 20 extend along radial axes 28 which project from the central stator axis 80. The slots 20 of the inner ring 26 are formed between the teeth 14 of the inner ring. The slots 20 of the inner ring 26 are open at radially outer ends 22 of the teeth 14.

In Figure 1 a single radial axis 28, extending from the central stator axis 80, through one of the slots 20 is illustrated for simplicity. In the illustrated embodiment there are seventy-two teeth 14 and a corresponding number of slots 20, though in other arrangements more, or fewer, teeth 14 may be provided with a corresponding number of slots 20.

The stator 10 and the rotor 70, are both centered on the central stator axis 80, with the stator 10 and rotor 70 being separated by an air gap 82. In use, the stator 10 remains stationary or substantially stationary, whilst the rotor 70 rotates within the central cylindrical core of the stator 10, around the central stator axis 80, to drive, for example, a driveshaft of an electric vehicle 500 in which the electric machine 400 may be located.

Each radially projecting or extending tooth 14 of the inner ring 12 comprises a radially inner end 18 of the tooth 14 and a radially outer end 22 of the tooth 14, the radially outer end 22 of the tooth 14 being further from the central stator axis 80 than the radially inner end 18 of the tooth 14.

Each tooth 14 is connected to adjacent teeth 14 by respective material bridges 16 at radially inner ends 18 of the teeth 14. That is, the material bridges 16 extend from the radially inner end 18 of one tooth 14 to the radially inner end 18 of an adjacent tooth 14.

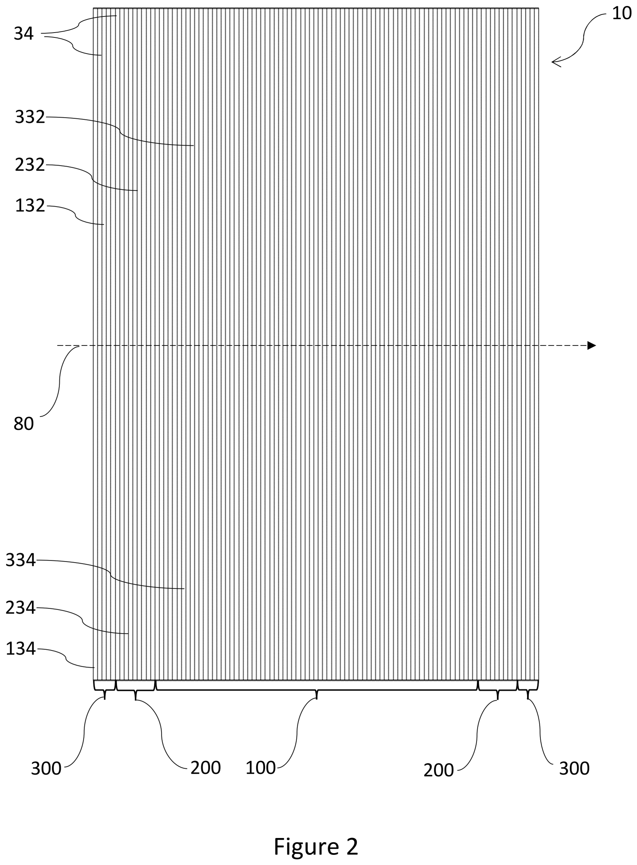

Figure 2 illustrates a side view of a stator 10, where the stator 10 is formed of a plurality of lamina 34, which may be manufactured of electrical steel, such as silicon steel. The plurality of lamina 34 are arranged axially along the central stator axis 80.

The stator 10 may be formed of an inner stator or inner ring 12 and an outer stator or outer ring 26, wherein the inner ring 12 is formed of a continuous array of inner ring lamina 30 from a first end of the stator 10 to a second end of the stator 10 along a central stator axis 80.

The cross section shown in Figure 1 may be considered to show one of a plurality of inner ring lamina 30 and a corresponding one of a plurality of outer ring lamina 32, where the inner ring lamina 30 and the corresponding outer ring lamina 32 form one lamina 34 of the stator 10 shown in Figure 2, wherein a plurality of lamina 34 form the stator 10.

Therefore, the inner ring 12 of the stator 10 may be formed of cooperating or abutting inner ring lamina 30 and the outer ring 26 of the stator 10 may be formed of cooperating or abutting outer ring lamina 32. Each pair of cooperating inner ring lamina 30 and outer ring lamina 32 may be cut from the same base sheet material.

Typically, each lamina 34 in the stator 10 is of substantially the same thickness, though in some alternative embodiments subsets of lamina 34 may be formed of different thickness material. Stator lamina thickness for a typical electric machine 400 may be in the range of 0.1 mm to 2 mm thick. For example, each single lamina 34 in the stator 10 may be 0.25 mm thick.

The stator 10 comprises an inner ring 12 with teeth 14 and slots 20 extending along radial axes 28 projecting from the central stator axis 80, the slots 20 being open to, or at, the radially outer end 22 of the teeth 14. The slots 20 in the stator 10, which are arranged or configured to house stator, or electrical, windings, can be closed to the air gap 82 between the stator 10 and the rotor 70. Although a two-part stator is described, in alternative embodiments a multi-part stator can be provided having more than two parts, for example, by having an outer ring 26 formed of two or more separate sections that can be abutted or joined to form the outer ring 26.

Each tooth 14 is separated from the adjacent teeth 14 by respective slots 20, wherein the slots 20 of the inner ring 12 are open at radially outer ends 22 of the teeth 14. That is, the ends of the slots 20 between radially outer ends 22 of adjacent teeth 14, which are more radially distal from the central axis 80 of the stator 10 than the other ends of the slots 20, are open, allowing the insertion of windings into the slot 20 from a radially outer surface of the inner ring 12.

The slots 20 thereby form substantially rectangular apertures for receiving and retaining windings of the stator 10. The material bridges 16 can therefore be considered to bridge the slots 20 between teeth 14. The form of the material bridges 16 may take various forms. In the embodiments described herein the material bridges 16 are symmetrical between the teeth 14, though in alternative embodiments, the material bridges 16 may be asymmetrical. For example, the thickness of the material bridges 16 may vary across the bridge length, between one tooth 14 and an adjacent tooth 14 such that one portion of the material bridge 16 may be less than the thickness of another portion of the material bridge 16. The material bridge 16 may be stepped from one portion to another portion. In some embodiments less than all of the material bridges 16 of the inner ring 12 of the stator 10 are asymmetric in shape, for example every other material bridge 16 around the inner ring 12 may be asymmetrical, with the other material bridges 16 being symmetrical. In other embodiments all of the material bridges 16 are asymmetric in shape. In other embodiments all of the material bridges 16 are symmetrical in shape.

The slots 20 may be formed to provide a channel or passage radially inward of the windings when windings have been inserted into the slots 20. An advantage of the provision of channels or passages in the slots 20 is that a cooling fluid, or coolant media, can be passed through the stator 10 from the first end of the stator 10 to the second end of the stator 10 in order to transport heat generated by the windings in the plurality of slots 20 of the stator 10 away from the electric machine 400, whilst maintaining the rotor 70 in a dry condition.

The windings may be a multi-stranded distributed winding or the windings could be hairpin windings. Hairpin windings are pre-formed windings of rectangular cross section with greater fill factor than for multi stranded distributed windings. Hairpin windings also provide better thermal performance and allow for a more automated manufacturing method or process. Hairpin windings may either be axially inserted into the slots, with their ends being joined, for example by welding, or they may be radially inserted into the slots. When radially inserted, a continuous hairpin winding may be used that does not require welding. Since a continuous hairpin winding does not require welding it has improved reliability over axially inserted windings and may lead to much simplified manufacturing of the stator 10.

The stator 10 comprises an outer ring 26, the outer ring 26 being located at the radially outer ends 22 of the teeth 14, in order to retain the windings in the slots 20 of the inner ring 12. The inner ring 12 may have an interference fit with the outer ring 26, such that it may be necessary to heat the outer ring 26 to expand the outer ring 26 before inserting the inner ring 12. That is, the outer ring 26 is heated to expand the outer ring 26 before placing the outer ring 26 over the inner ring 12. On cooling, the outer ring 26 then shrinks back in size to provide an interference fit with the inner ring 12.

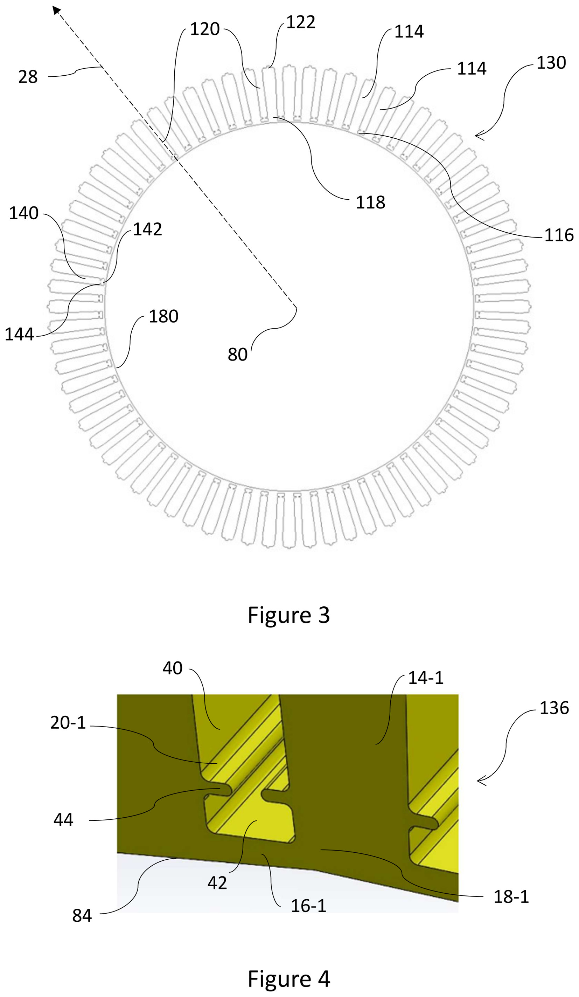

Whilst the radially outer ends 22 of the teeth 14 of the inner ring may be substantially planar or have a curvature to match the inner curvature of the outer ring 26, in some embodiments, such as the examples illustrated in Figure 3, Figure 5, and Figure 7, the radially outer ends 22 of the teeth 14 may be shaped to engage with corresponding features on the inner surface of the outer ring 26, to perform various functions such as tooth retention. The cutting of the shaped form of the radially outer ends 22 of the teeth 14 may also provide the formation of additional cooling channels which, in use, are disposed between the windings and outer ring 26 at the radially outer ends of the slots 20.

An arrangement of lamina of different forms to form the inner ring 12 of the stator 10 will now be described with reference to Figures 2 to 9.

Figure 2 illustrates a side view of the stator 10, where the stator 10 is formed of a plurality of lamina 34. Axially, the stack of lamina 34 is divided into a plurality of different subsets, or sub-stacks 100, 200, 300 of lamina 134, 234, 334.

A first sub-stack 100 of lamina 134, comprises a sub-stack of first inner ring lamina 130 and a sub-stack of first outer ring lamina 132. A second sub-stack 200 of lamina 234, comprises a sub-stack of second inner ring lamina 230 and a sub-stack of second outer ring lamina 232. A third sub-stack 300 of lamina 334, comprises a sub-stack of third inner ring lamina 330 and a sub-stack of third outer ring lamina 332.

In the embodiments described in relation to Figures 3 to 9, the outer ring lamina 132, 232, 223 of each of the lamina 134, 234, 334 in the stator 10 are identical, however, in alternative embodiments the outer ring lamina 132, 232, 332 of each of the sub-stacks 100, 200, 300 of lamina 134, 234, 334 in the stator 10 may not be identical and may be formed to provide different features to cooperate with respective features on the cooperating or respective inner ring lamina 130, 230, 330.

The inner ring lamina 130, 230, 330 form the inner ring 12 of the stator 10. In some embodiments, the stator 10 is formed of or comprises three distinct sub-stacks 100, 200, 300 of lamina 134, 234, 334, though in other embodiments a different number of sub-stacks of lamina may be provided.

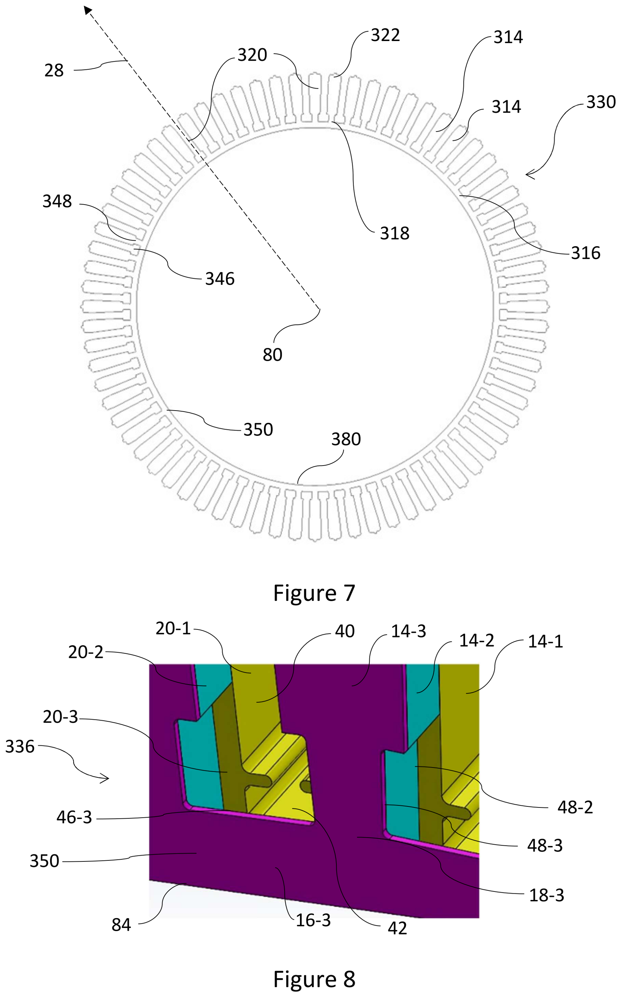

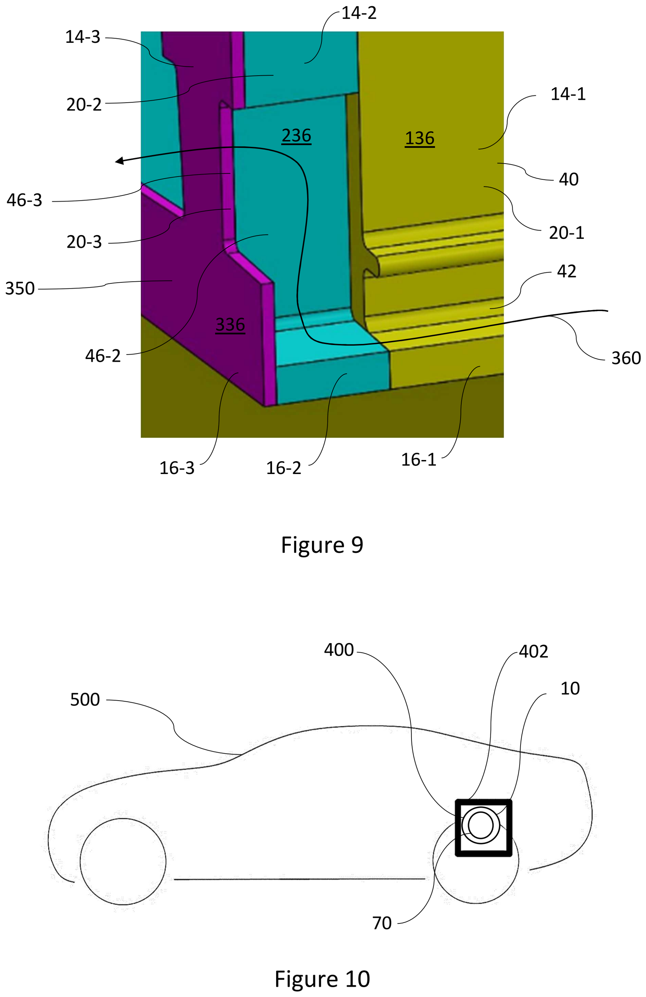

Figures 3 to 9 illustrate the various inner ring lamina 130, 230, 330 which are stacked to form the inner ring 12 of the stator 10. Figure 8 and Figure 9 illustrate the inner ring 12 of the stator 10 comprising a plurality of inner ring lamina 130, 230, 330 stacked along an axial direction of the stator 10.

The inner ring 12 in the following described embodiment comprises three distinct sub-stacks of inner ring lamina 130, 230, 330, though a different number of sub-stacks may be provided in other embodiments. The inner ring 12 has a cylindrical core suitable for the insertion of a rotor 70. The cylindrical core is aligned along the central axis 80 of the stator 10.

The sub-stack of first inner ring lamina 130 comprises a plurality of first inner ring lamina 130, forming a first section 136, of the inner ring 12. Each of the first inner ring lamina 130 comprises a plurality of radially projecting first inner ring lamina teeth 114. Each first inner ring lamina tooth 114 is connected to adjacent first inner ring lamina teeth 114 by respective first inner ring lamina material bridges 116 at radially inner ends 118 of the first inner ring lamina teeth 114. Each first inner ring lamina tooth 114 is separated from adjacent first inner ring lamina teeth 114 by respective first inner ring lamina slots 120. The first inner ring lamina slots 120 extend along radial axes 28 projecting from the central stator axis 80, open to the radially outer end 122 of the first inner ring lamina teeth 114. When the first inner ring lamina 130 are abutted together in the sub-stack of first inner ring lamina 130, the first inner ring lamina slots 120 are aligned to form first inner ring slots 20-1 through the sub-stack of first inner ring lamina 130, the first inner ring lamina material bridges 116 are aligned to form first inner ring material bridges 16-1 through the sub-stack of first inner ring lamina 130, and the first inner ring lamina teeth 114 are aligned to form first inner ring teeth 14-1 through the sub-stack of first inner ring lamina 130, the first inner ring teeth 14-1 having radially inner ends 18-1, as illustrated in Figure 4.

The first inner ring lamina slots 120 each comprise a winding slot aperture 140, for receiving and retaining windings of the electric machine 400, and a cooling channel aperture 142, for receiving a cooling fluid intended to cool the windings of the stator 10 and the stator itself, and therefore the electric machine 400 in general.

The cooling channel aperture 142 is located between the winding slot aperture 140 and an inner circumference 180 of the first inner ring lamina 130, where the inner circumference 180 of the first inner ring lamina 130 also defines the inner circumference 84 of the stator 10, and where the inner circumference 84 of the stator 10 defines the aperture in the stator 10 through which the rotor 70 of the electric machine 400 is intended to be positioned.

The cooling channel aperture 142 is separated from the inner circumference 180 of the first inner ring lamina 130 by the first inner ring lamina material bridges 116.

The cooling channel aperture 142 is separated from the winding slot aperture 140 by a narrowing 144 of the first inner ring lamina slot 120. The narrowing 144 of the first inner ring lamina slot 120 is intended to be proximal to or abut a radially inner section of the windings, to retain the windings outside of the cooling channel aperture 142, thereby allowing passage of a cooling fluid through the stator 10 adjacent the windings.

When the first inner ring lamina 130 are abutted together in the sub-stack of first inner ring lamina 130, the winding slot apertures 140 are aligned to form winding slots 40 through the sub-stack of first inner ring lamina 130, and the cooling channel apertures 142 are aligned to form cooling channels 42 through the sub-stack of first inner ring lamina 130 with narrowings 44 located between the cooling channels 42 and the winding channels 40, as illustrated in Figure 4.

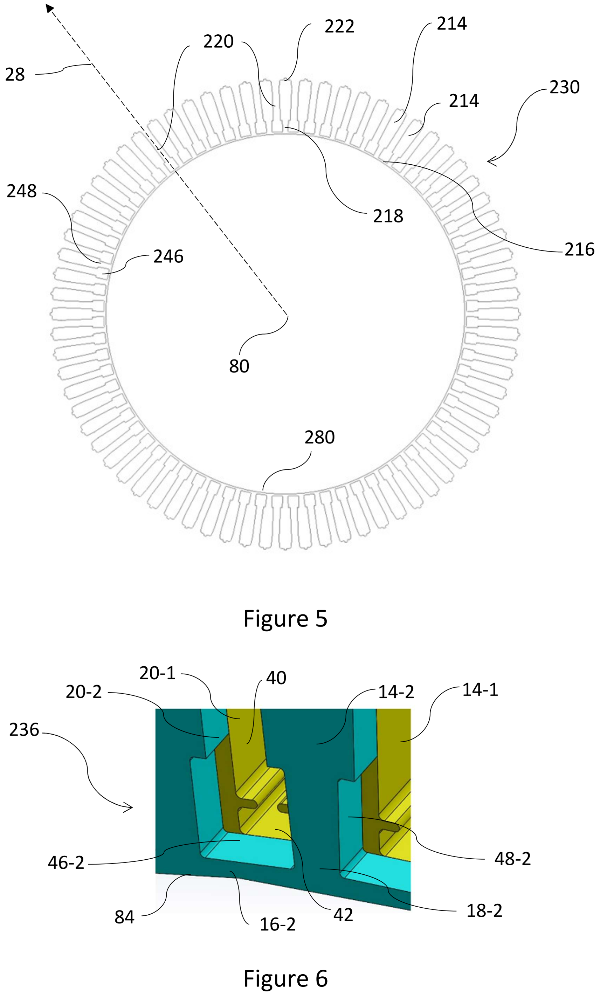

The sub-stack of second inner ring lamina 230 comprises a plurality of second inner ring lamina 230 forming a second section 236 of the inner ring 12. Each of the second inner ring lamina 230 comprises a plurality of radially projecting second inner ring lamina teeth 214. Each second inner ring lamina tooth 214 is connected to adjacent second inner ring lamina teeth 214 by respective second inner ring lamina material bridges 216 at radially inner ends 218 of the second inner ring lamina teeth 214. Each second inner ring lamina tooth 214 is separated from the adjacent second inner ring lamina teeth 214 by respective second inner ring lamina slots 220. The second inner ring lamina slots 220 extend along radial axes 28 projecting from the central stator axis 80, open to the radially outer end 222 of the second inner ring lamina teeth 214. When the second inner ring lamina 230 are abutted together in the sub-stack of second inner ring lamina 230, the second inner ring lamina slots 220 are aligned to form second inner ring slots 20-2 through the sub-stack of second inner ring lamina 230, the second inner ring lamina material bridges 216 are aligned to form second inner ring material bridges 16-2 through the sub-stack of second inner ring lamina 230, and the second inner ring lamina teeth 214 are aligned to form second inner ring teeth 14-2 through the sub-stack of second inner ring lamina 230, the second inner ring teeth 14-2 having radially inner ends 18-2, as illustrated in Figure 6.

The second inner ring lamina slots 220 each comprise a widened second inner ring lamina slot formation 246 proximal or adjacent to the respective second inner ring lamina material bridge 216. The widening of a second inner ring lamina slot formation 246 can be considered to be a widening in a circumferential direction or in a plane perpendicular to the central stator axis 80 and perpendicular to the radial axis 28 of the second inner ring lamina slot formation 246. Each widened second inner ring lamina slot formation 246 extends over the radial extent of the cooling channel apertures and over at least part of the radial extent of the winding slot apertures of the plurality of first inner ring lamina.

The widened second inner ring lamina slot formation 246 is separated from an inner circumference 280 of the second inner ring lamina 230 by the second inner ring lamina material bridges 216, where the inner circumference 280 of the second inner ring lamina 230 also defines the inner circumference 84 of the stator 10.

When the second inner ring lamina 230 are abutted together in the sub-stack of second inner ring lamina 230, the widened second inner ring lamina slot formations 246 are aligned to form widened second inner ring slot formations 46-2 through the sub-stack of second inner ring lamina 230, located at the radially inner end of the second inner ring slots 20-2, and the second inner ring lamina material bridges 216 are aligned to form second inner ring material bridges 16-2 through the sub-stack of second inner ring lamina 230, as illustrated in Figure 6.

The radially inner ends of each of the second inner ring lamina teeth 214 comprise respective narrowed sections 248. The narrowing of a radially inner end of the second inner ring lamina tooth 214 can be considered to be a narrowing in a circumferential direction or in a plane perpendicular to the central stator axis 80 and perpendicular to the radial axis 28 of the second inner ring lamina tooth 214. When the second inner ring lamina 230 are abutted together in the sub-stack of second inner ring lamina 230, the narrowed sections 248 are aligned to form narrowed second inner ring teeth 48-2 through the sub-stack of second inner ring lamina 230.

The sub-stack of third inner ring lamina 330 comprises a plurality of third inner ring lamina 330 forming a third section 336 of the inner ring 12. Each of the third inner ring lamina 330 comprises a plurality of radially projecting third inner ring lamina teeth 314. Each third inner ring lamina tooth 314 is connected to adjacent third inner ring lamina teeth 314 by respective third inner ring lamina material bridges 316 at radially inner ends 318 of the third inner ring lamina teeth 314. Each third inner ring lamina tooth 314 is separated from the adjacent third inner ring lamina teeth 314 by respective third inner ring lamina slots 320. The third inner ring lamina slots 320 extend along radial axes 28 projecting from the central stator axis 80, open to the radially outer end 322 of the third inner ring lamina teeth 314. When the third inner ring lamina 330 are abutted together in the sub-stack of third inner ring lamina 330, the third inner ring lamina slots 320 are aligned to form third inner ring slots 20-3 through the sub-stack of third inner ring lamina 330, the third inner ring lamina material bridges 316 are aligned to form third inner ring material bridges 16-3 through the sub-stack of third inner ring lamina 330, and the third inner ring lamina teeth 314 are aligned to form third inner ring teeth 14-3 through the sub-stack of third inner ring lamina 330, the third inner ring teeth 14-3 having radially inner ends 18-3, as illustrated in Figure 8.

The third inner ring lamina material bridge 316 of the third inner ring lamina 330 is of greater radial thickness than the second inner ring material bridge 216 of the second inner ring lamina 230.

The greater radial thickness of the third inner ring lamina material bridge 316 provides for a larger sealing surface or seal interface surface 350 for receiving an axial seal, that is, for receiving a seal such as an O-ring, which is to be located on the face of the axially outer lamina of the plurality of third inner ring lamina 330 of the stator 10. The use of axial seals, which are intended to be located at the ends of the stator 10 in circumferential arrangements abutting the third inner ring lamina material bridges 316, avoids having to provide a seal within a core of the stator 10, where the core, in use, contains the rotor 70 of the electric machine 400 and an air gap 82 between the rotor 70 and the stator 10.

An axial seal can be provided between the axially outer lamina of the plurality of third inner ring lamina 330 of the stator 10 and a sealing arrangement, such as a tube, which is located between the stator 10 and a housing 402 of the electric machine 400 in which the stator 10 is located. The face of the axially outer lamina of the plurality of third inner ring lamina 330 provides a sealing surface or seal interface surface 350, which is formed, at least in part, by the third inner ring lamina material bridges 316 which have been formed to have a greater radial thickness than the material bridges 116 of the plurality of first inner ring lamina 130 and the material bridges 216 of the plurality of second inner ring lamina 230.

The stator 10 can then be effectively sealed against the housing 402 of the electric machine 400 within which the stator 10 is located to prevent, or at least minimize, cooling fluid, which is intended to pass through the stator slots 120, 220, 320 for cooling that stator 10, from passing into an area where the rotor 70 is located in the electric machine 400.

Whilst the greater radial thickness of the third inner ring lamina material bridge 316, as compared to the radial thickness of the first inner ring lamina material bridge 116 and the second inner ring lamina material bridge 216, provides for a larger sealing surface, or seal interface surface 350 for receiving an axial seal, it is observed that this increased radial thickness of the third inner ring lamina material bridge 316 may obstruct the flow of cooling fluid through the stator 10. In order to alleviate any reduction or restriction of cooling fluid flow through the stator 10, the third inner ring lamina 330 are provided with a widened third inner ring lamina slot formation 346.

The third inner ring lamina slots 320 each comprise a widened third inner ring lamina slot formation 346 proximal to the respective third inner ring lamina material bridge 316. The widening of a third inner ring lamina slot formation 346 can be considered to be a widening in a circumferential direction or in a plane perpendicular to the central stator axis 80 and perpendicular to the radial axis 28 of the third inner ring lamina slot formation 346.

The widened third inner ring lamina slot formation 346 is separated from an inner circumference 380 of the third inner ring lamina 330 by the third inner ring lamina material bridges 316, where the inner circumference 380 of the third inner ring lamina 330 also defines the inner circumference 84 of the stator 10.

When the third inner ring lamina 330 are abutted together in the sub-stack of third inner ring lamina 330, the widened third inner ring lamina slot formations 346 are aligned to form widened third inner ring slot formations 46-3 through the sub-stack of third inner ring lamina 330, located at the radially inner end of the third inner ring slots 20-3, and the third inner ring lamina material bridges 316 are aligned to form third inner ring material bridges 16-3 through the sub-stack of third inner ring lamina 330, as illustrated in Figure 8.

The radially inner ends of each of the third inner ring lamina teeth 314 comprise respective narrowed sections 348. The narrowing of a radially inner end of the third inner ring lamina tooth 314 can be considered to be a narrowing in a circumferential direction or in a plane perpendicular to the central stator axis 80 and perpendicular to the radial axis 28 of the third inner ring lamina tooth 314. When the third inner ring lamina 330 are abutted together in the sub-stack of third inner ring lamina 330, the narrowed sections 348 are aligned to form narrowed third inner ring teeth 48-3 through the sub-stack of third inner ring lamina 330.

In order to facilitate the flow of cooling fluid through the slots 120, 220, 320 of the stator 10, the second inner ring lamina slots 220 each comprise a widened second inner ring lamina slot formation 246 proximal to the respective second inner ring lamina material bridge 216 and the third inner ring lamina slots 320 each comprise a widened second inner ring lamina slot formation 346 proximal to the respective third inner ring lamina material bridge 316. The width of the second inner ring lamina slots 220 at the widened second inner ring lamina slot formation 246 may be equal to the width of the third inner ring lamina slots 320 at the widened third inner ring lamina slot formation 346.

Cooling fluid passing through the cooling channel apertures 142 of the first inner ring lamina slots 120 can then flow into the widened second inner ring lamina slot formation 246 around the windings, and then pass into the widened third inner ring lamina slot formation 346, again around the windings, to pass through the third inner ring lamina slot formation 346 at, at least, either side of the windings.

As illustrated in Figure 2, the stator 10 comprises subsets, or sub-stacks 100, 200, 300 of lamina 134, 234, 334, a central portion being formed of the plurality of first inner ring lamina 134, with a plurality of second inner ring lamina 234 at each axial end of the plurality of first inner ring lamina 134 and a plurality of third inner ring lamina 334 at the axially outer ends of each of the plurality of second inner ring lamina 234. In other words, the stator 10 comprises a central portion being formed of the first section 136, with a second section 236 at each axial end of the first section 136, and a third section 336 at the axially outer ends of each of the second sections 236.

Figure 9 further illustrates the stacking of a plurality of lamina 34 of the stator 10, in particular the stacking of the first inner ring lamina 130, second inner ring lamina 230, and third inner ring lamina 330, and the flow path 360 of a cooling fluid through therethrough.

As seen in Figure 9, which shows a cutaway perspective of a portion of the first section 136, second section 236, and third section 336, that is, a portion of a stack of first inner ring lamina 130, second inner ring lamina 230, and third inner ring lamina 330 at one side of a stator 10, the flow path 360 generally follows a path through the cooling channel 42 of the first inner ring slots 20-1 of the first section 136, below the winding slot 40 in which windings are located in use, and into the widened second inner ring slot formation 46-2 of the second inner ring slots 20-2.

The windings of the electric machine 400 are located through the second inner ring slots 20-2 in use, such that part of the windings are located within the second inner ring slots 20-2 in use. Due to the geometry of the widened second inner ring slot formation 46-2 of the second inner ring slots 20-2 the cooling fluid is not only able to continue to flow along an axial path defined by the cooling channel 42 of the first section 136, radially inward of the windings, but is also able to pass either side of the windings by flowing firstly in a circumferential direction towards the narrowed sections 48-2 of the adjacent second inner ring teeth 14-2, and secondly to flow radially outward within the widened second inner ring slot formation 46-2 of the second inner ring slots 20-2 either side of the windings. The cooling fluid is able to follow this path as the windings are limited in width to the width of the first inner ring slots 20-1 which are narrower than the second inner ring slots 20-2.

The flow path 360 then passes axially, that is, parallel to the central stator axis 80, through the third inner ring slots 20-3 which are, in some embodiments, equal in width to the second inner ring slots 20-2. Since the third inner ring material bridge 16-3 is of greater radial thickness than the second inner ring material bridge 16-2, the cooling fluid is forced to flow radially outward, relative to the central stator axis 80, in the second inner ring slots 20-2 before being ejected from the stator 10 at the third inner ring slot 20-3.

Therefore, an arrangement of a stack of first inner ring lamina 130, second inner ring lamina 230, and third inner ring lamina 330, forming a respective first section 136, second section 236, and third section 336, provides a channel for the flow path 360 which deviates the flow of cooling fluid axially outward of the cooling channel 42 to be ejected from the stator 10 circumferentially either side of the windings, thus allowing for a larger seal interface surface 350 for receiving an axial seal to prevent cooling fluid from passing onto the rotor 70 or other components of the electric machine 400 for which the cooling fluid is not required.

It will be understood that at the other end of the stator 10 to the arrangement shown in Figure 9, a mirrored arrangement may be present. In some embodiments the flow path 360 of the cooling fluid may be as described above in relation to the first end of the stator 10, in particular where cooling fluid is inserted into the stator in an axially central location of the stator 10.

In other embodiments where the flow of cooling fluid through the stator 10 is from a first side of the stator 10 to a second side of the stator 10, the flow path 360 of the cooling fluid is effectively reversed from the arrangement described in relation to Figure 9. That is, the cooling fluid enters the stator 10 at the third inner ring slot 20-3, passes either side of the windings and axially inward of the windings through the widened second inner ring slot formation 46-2 of the second inner ring slot 20-2, and is forced to flow axially inward towards the into the cooling channel 42 of the first inner ring slot 20-1.

The stator 10 further comprises an outer ring 26. The outer ring 26 is formed of a plurality of outer ring lamina 32 stacked along an axial direction of the stator 10. In use, the outer ring 26 is located at the radially outer ends 122, 222, 322 of the teeth 114, 214, 314 of the inner ring 12, the inner ring 12 being formed of a plurality of inner ring lamina 130, 230, 330.

The outer ring 26 may be formed of outer ring lamina 32 in sub-stacks with different formations to be engaged with respective teeth 114, 214, 314 of the plurality of inner ring lamina 130, 230, 330 of the inner ring 12. The outer ring sub-stacks may, for example, comprise three distinct sub-stacks of outer ring lamina 132, 232, 332, though a different number of sub-stacks may be provided in other embodiments.

As illustrated in Figure 8 and Figure 9, at least a portion of each of the radially projecting first inner ring lamina teeth 114 of the plurality of first inner ring lamina 130, may overlay a portion of a respective radially projecting second inner ring lamina tooth 214 of the plurality of second inner ring lamina 230, and may overlay a portion of a respective radially projecting third inner ring lamina tooth 314 of the plurality of third inner ring lamina 330 to form axially extending stator winding slots 20 and corresponding axially extending teeth 14 of the inner ring 12. The axially extending stator winding slots 20 may be arranged or configured to receive and retain electrical windings.

The plurality of second inner ring lamina material bridges 216 may be of the same, or substantially the same, radial thickness as the plurality of first inner ring lamina material bridges 116. The radial thickness being the thickness of the material bridges 116, 216 extending in a radial direction along an axis 28 extending perpendicular from the central stator axis 80. This allows a cooling fluid to flow freely between the first inner ring lamina 130 and second inner ring lamina 230, via the slots therein.

The widened second inner ring lamina slot formations 246 of the plurality of second inner ring lamina 230 extend circumferentially such that the plurality of second inner ring lamina slot formations 246 are wider than the cooling channel aperture 142 of the plurality of first inner ring lamina 130 proximal to the respective first inner ring lamina material bridges 116 and second inner ring lamina material bridges 216. This widening provides for cooling fluid to flow to either side of the windings in the slots 20 of the stator 10 at the location of the second inner ring lamina 230, thereby providing additional cooling to the windings and an improved flow path 360 for the cooling fluid through the stator 10.

The widened second inner ring lamina slot formations 246 of the plurality of second inner ring lamina 230 may extend from the second inner ring lamina material bridges 216 to a location or position radially outward of the location or position of the narrowing 144 of the first inner ring lamina slots 120 of the plurality of first inner ring lamina 130. The widened second inner ring lamina slot formations 246 of the plurality of second inner ring lamina 230 extends over the radial extent of the cooling channel apertures 142 and at least part of the winding slot apertures 140 of the plurality of first inner ring lamina 130.

Therefore, the widened second inner ring lamina slot formations 246 extend at either side of the windings when the windings are located in the slots 20 of the stator 10, as the radially inner end of the windings are configured or arranged to abut or be located proximal to the narrowing 144 of the first inner ring lamina slots 120 of the plurality of first inner ring lamina 130. The narrowing 144 of the first inner ring lamina slots 120 of the plurality of first inner ring lamina 130 essentially act as a stop to retain the windings in place when received in the slots 20 of the stator 10.

The widened third inner ring lamina slot formations 346 of the plurality of third inner ring lamina 330 may extend from a location radially outward of the second inner ring lamina material bridges 216 of the plurality of second inner ring lamina 230 to a location radially outward of the narrowing 144 of the first inner ring lamina slots 120 of the plurality of first inner ring lamina 130.

The widened third inner ring lamina slot formations 346 therefore provide a cooling fluid redirection surface which causes cooling fluid passing through the second inner ring lamina slots 220 to deflect radially away from the central stator axis 80 before it is allowed to exit the stator 10 at the opening provided by the third inner ring lamina slots 320.

The third inner ring lamina 330 provide larger, in a radial direction, third inner ring lamina material bridges 316, than the respective material bridges provided by the second inner ring lamina material bridges 216 and first inner ring lamina material bridges 116. The larger third inner ring lamina material bridges 316 provided at the axial end of the stator 10 provides a seal interface surface 350 against which a seal arrangement may be provided to prevent cooling fluid from deflecting onto the rotor 70 or other undesirable locations in the electric machine 400.

Figure 10 illustrates a vehicle 500 with an electric machine 400 as described above, where that electric machine 400 comprises a stator 10 as described above.

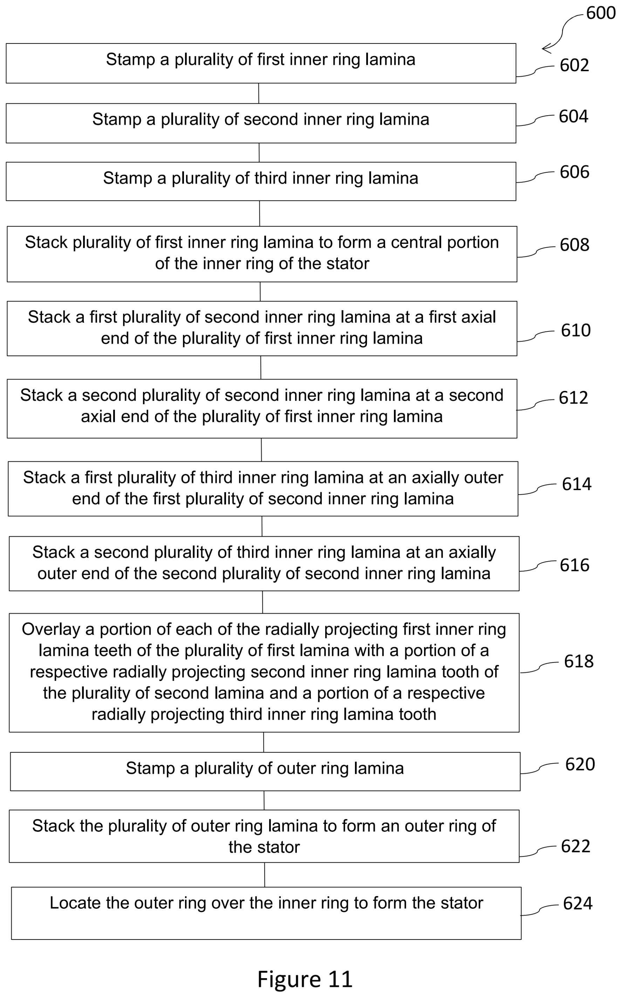

Figure 11 shows a flow diagram 600 for a method of manufacturing a stator 10, wherein the stator 10 is as described above.

At block 602 a first section 136 of the inner ring 12 of the stator 10 is formed. The first section 136 comprises a plurality of first inner ring slots 20-1, each first inner ring slot 20-1 comprising a winding slot 40, configured to receive windings, and a cooling channel 42, configured for the passage of a cooling fluid in an axial direction, the cooling channel 42 being located between the winding slot 40 and an inner circumference 80 of the inner ring, and being separated from the winding slot 40 by a narrowing 44 of the first inner ring slot 20-1, the narrowing 44 of the first inner ring slot 20-1 being configured to retain the windings inside the winding slot 40.

In some embodiments, a plurality of first inner ring lamina 130 are stamped, for example, from a sheet steel material, to form the first section 136 of the inner ring 12 of the stator 10.

Each of the first inner ring lamina 130 comprises a plurality of radially projecting first inner ring lamina teeth 114. Each first inner ring lamina tooth 114 is connected to adjacent first inner ring lamina teeth 114 by respective first inner ring lamina material bridges 116 at radially inner ends 118 of the first inner ring lamina teeth 114, and is separated from the adjacent first inner ring lamina teeth 114 by respective first inner ring lamina slots 120.

The first inner ring lamina slots 120 each comprise a winding slot aperture 140 and a cooling channel aperture 142, the cooling channel aperture 142 being located between the winding slot aperture 140 and an inner circumference 180 of the first inner ring lamina 130, and being separated from the winding slot aperture 140 by a narrowing 144 of the first inner ring lamina slot 120.

At block 604 two second sections 236 of the inner ring 12 of the stator 10 are formed. Each second section 236 comprises second inner ring slots 20-2, each second inner ring slot 20-2 comprising a widened second inner ring slot formation 46-2 at a radially inner section of the second inner ring slot 20-2.

In some embodiments, a plurality of second inner ring lamina 230 are stamped, for example, from a sheet steel material, to form the second sections 236 of the inner ring 12 of the stator 10.

Each of the second inner ring lamina 230 comprises a plurality of radially projecting second inner ring lamina teeth 214. Each second inner ring lamina tooth 214 is connected to adjacent second inner ring lamina teeth 214 by respective second inner ring lamina material bridges 216 at radially inner ends 218 of the second inner ring lamina teeth 214, and is separated from the adjacent second inner ring lamina teeth 214 by respective second inner ring lamina slots 220.

The second inner ring lamina slots 220 each comprise a widened second inner ring lamina slot formation 246 proximal to the respective second inner ring lamina material bridge 216.

At block 606 two third sections 336 of the inner ring 12 of the stator 10 are formed. Each third section 336 comprising third inner ring slots 20-3, each third inner ring slot 20-3 comprising a widened third inner ring slot formation 46-3 at a radially inner section of the third inner ring slot 20-3 and a radially thicker formation 16-3 at a radially inner end of the third inner ring slot 20-3 than at a radially inner end of the second inner ring slot 20-2, the radially thicker formation 16-3 at the radially inner end of the third inner ring slot 20-3 forming a sealing surface 350 configured to receive a seal.

In some embodiments, a plurality of third inner ring lamina 330 are stamped, for example, from a sheet steel material, to form a third section of the inner ring 12 of the stator 10.

Each of the third inner ring lamina 330 comprises a plurality of radially projecting third inner ring lamina teeth 314. Each third inner ring lamina tooth 314 is connected to adjacent third inner ring lamina teeth 314 by respective third inner ring lamina material bridges 316 at radially inner ends 318 of the third inner ring lamina teeth 314, and is separated from the adjacent third inner ring lamina teeth 314 by respective third inner ring lamina slots 320.

The third inner ring lamina material bridge 316 is of greater radial thickness than the second inner ring lamina material bridge 216. The third inner ring lamina slots 320 each comprise a widened third inner ring lamina slot formation 346 proximal to the respective third inner ring lamina material bridge 316.

The plurality of first inner ring lamina 130, the plurality of second inner ring lamina 230, and the plurality of third inner ring lamina 330, may have circular inner surfaces to form, when stacked along an axial direction of the stator, a central cylindrical core of the stator 10 for receiving a rotor 70.

At block 608, where the first section 136 is formed of a plurality of first inner ring lamina 130, the plurality of first inner ring lamina 130 are stacked along an axial direction of the stator 10 as a central portion of the inner ring 12 of the stator 10.

At block 610, a first second section 236 is arranged to abut a first axial end of the first section. Where the second sections 236 are formed of a plurality of second inner ring lamina 230, a first plurality of second inner ring lamina 230 is stacked at a first axial end of the plurality of first inner ring lamina 130.

At block 612, a second second section 236 is arranged to abut a second axial end of the first section. Where the second sections 236 are formed of a plurality of second inner ring lamina 230, a second plurality of second inner ring lamina 230 is stacked at a second axial end of the plurality of first inner ring lamina 130.

At block 614, a first third section 336 is arranged to abut an axially outer end of the first second section 236. Where the third sections 336 are formed of a plurality of third inner ring lamina 330, a first plurality of third inner ring lamina 330is stacked at an axially outer end of the first plurality of second inner ring lamina 230.

At block 616, a second third section 336 is arranged to abut an axially outer end of the second second section 236. Where the third sections 336 are formed of a plurality of third inner ring lamina 330, a second plurality of third inner ring lamina 330 is stacked at an axially outer end of the second plurality of second inner ring lamina 230.

At block 618 at least a portion of each of the radially projecting first inner ring teeth 14-1 are overlaid with a portion of a respective radially projecting second inner ring tooth 14-2 and a portion of a respective radially projecting third inner ring tooth 14-3 to form axially extending radially projecting stator teeth 14 of the inner ring 12.

Where the first section 136, second section 236, and third section 336, are formed of lamina, at least a portion of each of the radially projecting first inner ring lamina teeth 114 are overlaid with a portion of a respective radially projecting second inner ring lamina tooth 214 and a portion of a respective radially projecting third inner ring lamina tooth 314 to form axially extending radially projecting stator teeth 14 of the inner ring 12. Between the radially projecting stator teeth 14 of the inner ring 12 axially extending winding slots 20 are formed, for the receipt and retention of electrical windings.

At block 620 an outer ring 26 is formed. Where the outer ring 26 is formed of lamina, a plurality of outer ring lamina 32 may be stamped or cut, for example, from a sheet steel material. The outer ring lamina 32 are configured to be located at radially outer ends 122, 222, 322 of the inner ring lamina teeth 114, 214, 314 of respective inner ring lamina 130, 230, 330, in use.

At block 622, when the outer ring 26 is formed of lamina, the plurality of outer ring lamina 32 are stacked to form an outer ring 26 of the stator 10. The outer ring 26 is configured to be located at the radially outer ends 22 of the teeth 14 of the inner ring 12, in use.

At block 624 the outer ring 26 is located over the inner ring 12 to form the stator 10. In some embodiments, prior to positioning or locating the outer ring 26 over the inner ring 12, windings are inserted into the slots 20 of the inner ring 12.

The blocks illustrated in figure 11 may represent steps in a process or method 600. The illustration of a particular order to the blocks does not necessarily imply that there is a required or preferred order for the blocks and the order and arrangement of the blocks may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed.

For example, whilst the first section 136, second section 236, and third section 336, of the inner ring 12 are described as being formed using a plurality of lamina, it will be understood that, in certain embodiments, they may be formed in a different manner, for example by casting or machining a larger block of material. In one embodiment, the third section 336 may be formed of a thicker single lamina rather than a plurality of thinner lamina.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A stator comprising an inner ring having a cylindrical core centred on a central axis for receiving a rotor in an axial direction along the central axis, the inner ring comprising:
a first section comprising a plurality of first inner ring slots, each first inner ring slot comprising a winding slot, configured to receive windings, and a cooling channel, configured for the passage of a cooling fluid in an axial direction, the cooling channel being located between the winding slot and an inner circumference of the inner ring, and being separated from the winding slot by a narrowing of the first inner ring slot, the narrowing of the first inner ring slot being configured to retain the windings inside the winding slot;
a second section, abutting the first section, comprising second inner ring slots, each second inner ring slot comprising a widened second inner ring slot formation at a radially inner section of the second inner ring slot; and
a third section, abutting the second section, comprising third inner ring slots, each third inner ring slot comprising a widened third inner ring slot formation at a radially inner section of the third inner ring slot and a radially thicker formation at a radially inner end of the third inner ring slot than at a radially inner end of the second inner ring slot, the radially thicker formation at the radially inner end of the third inner ring slot forming a sealing surface configured to receive a seal.

2. A stator according to claim 1, wherein the stator comprises a central portion formed of the first section, with a second section at each axial end of the first section, and a third section at the axially outer ends of each of the second sections.

3. A stator according to claim 1 or claim 2, wherein the inner ring is formed of a plurality of inner ring lamina stacked along the central axis, the plurality of inner ring lamina comprising:
a plurality of first inner ring lamina forming the first section, each of the first inner ring lamina comprising a plurality of radially projecting first inner ring lamina teeth, each first inner ring lamina tooth being connected to adjacent first inner ring lamina teeth by respective first inner ring lamina material bridges at radially inner ends of the first inner ring lamina teeth, and being separated from the adjacent first inner ring lamina teeth by respective first inner ring lamina slots, wherein the first inner ring lamina slots each comprise a winding slot aperture and a cooling channel aperture, the cooling channel aperture being located between the winding slot aperture and an inner circumference of the first inner ring lamina, and being separated from the winding slot aperture by a narrowing of the first inner ring lamina slot;
a plurality of second inner ring lamina forming the second section, each of the second inner ring lamina comprising a plurality of radially projecting second inner ring lamina teeth, each second inner ring lamina tooth being connected to adjacent second inner ring lamina teeth by respective second inner ring lamina material bridges at radially inner ends of the second inner ring lamina teeth, and being separated from the adjacent second inner ring lamina teeth by respective second inner ring lamina slots, wherein the second inner ring lamina slots each comprise a widened second inner ring lamina slot formation proximal to the respective second inner ring lamina material bridge;
a plurality of third inner ring lamina forming the third section, each of the third inner ring lamina comprising a plurality of radially projecting third inner ring lamina teeth, each third inner ring lamina tooth being connected to adjacent third inner ring lamina teeth by respective third inner ring lamina material bridges at radially inner ends of the third inner ring lamina teeth, and being separated from the adjacent third inner ring lamina teeth by respective third inner ring lamina slots, wherein the third inner ring lamina material bridge is of greater radial thickness than the second inner ring lamina material bridge, and wherein the third inner ring lamina slots each comprise a widened third inner ring lamina slot formation proximal to the respective third inner ring lamina material bridge.

4. A stator according to claim 3, wherein at least a portion of each of the radially projecting first inner ring lamina teeth of the plurality of first inner ring lamina, overlays a portion of a respective radially projecting second inner ring lamina tooth of the plurality of second inner ring lamina, and overlays a portion of a respective radially projecting third inner ring lamina tooth of the plurality of third inner ring lamina to form axially extending stator winding slots and corresponding axially extending teeth of the inner ring.

5. A stator according to claim 4, wherein the stator comprises an outer ring formed of a plurality of outer ring lamina stacked along an axial direction of the stator to form an outer ring, the outer ring located at the radially outer ends of the axially extending teeth of the inner ring.

6. A stator according to any of claims 3 to 5, wherein the radially extending thickness of the plurality of second inner ring lamina material bridges is of substantially the same radially extending thickness as the plurality of first inner ring lamina material bridges.

7. A stator according to any of claims 3 to 6, wherein the widened second inner ring lamina slot formations extend circumferentially such that the plurality of second inner ring lamina slot formations are wider than the cooling channel aperture of the plurality of first inner ring lamina proximal to the respective first inner ring lamina material bridges and second inner ring lamina material bridges.

8. A stator according to any of claims 3 to 7, wherein the widened second inner ring lamina slot formations of the plurality of second inner ring lamina extend from the second inner ring lamina material bridges to a location radially outward of the narrowing of the first inner ring lamina slots of the plurality of first inner ring lamina.

9. A stator according to any of claims 3 to 8, wherein the widened third inner ring lamina slot formations of the plurality of third inner ring lamina extend from a location radially outward of the second inner ring lamina material bridges to a location radially outward of the narrowing of the first inner ring lamina slots.

10. An electric machine comprising a stator as claimed in any one of the preceding claims and a rotor.

11. A vehicle comprising one or more electric machines as claimed in claim 10.

12. A method of manufacture of a stator, comprising:
forming a first section of the inner ring of the stator, the first section comprising a plurality of first inner ring slots, each first inner ring slot comprising a winding slot, configured to receive windings, and a cooling channel, configured for the passage of a cooling fluid in an axial direction, the cooling channel being located between the winding slot and an inner circumference of the inner ring, and being separated from the winding slot by a narrowing of the first inner ring slot, the narrowing of the first inner ring slot being configured to retain the windings inside the winding slot;
forming two second sections of the inner ring of the stator, each second section comprising second inner ring slots, each second inner ring slot comprising a widened second inner ring slot formation at a radially inner section of the second inner ring slot;
forming two third section of the inner ring of the stator, each third section comprising third inner ring slots, each third inner ring slot comprising a widened third inner ring slot formation at a radially inner section of the third inner ring slot and a radially thicker formation at a radially inner end of the third inner ring slot than at a radially inner end of the second inner ring slot, the radially thicker formation at the radially inner end of the third inner ring slot forming a sealing surface configured to receive a seal;
abutting a first second section at a first axial end of the first section and abutting a second second section at a second axial end of the first section; and
abutting a first third section at an axially outer end of the first second section and abutting a second third section at an axially outer end of the second second section.

13. A method of manufacture of a stator according to claim 12, comprising:
stamping a plurality of first inner ring lamina, each of the first inner ring lamina comprising a plurality of radially projecting first inner ring lamina teeth, each first inner ring lamina tooth being connected to adjacent first inner ring lamina teeth by respective first inner ring lamina material bridges at radially inner ends of the first inner ring lamina teeth, and being separated from the adjacent first inner ring lamina teeth by respective first inner ring lamina slots, wherein the first inner ring lamina slots each comprise a winding slot aperture and a cooling channel aperture, the cooling channel aperture being located between the winding slot aperture and an inner circumference of the first inner ring lamina, and being separated from the winding slot aperture by a narrowing of the first inner ring lamina slot;
stamping a plurality of second inner ring lamina, each of the second inner ring lamina comprising a plurality of radially projecting second inner ring lamina teeth, each second inner ring lamina tooth being connected to adjacent second inner ring lamina teeth by respective second inner ring lamina material bridges at radially inner ends of the second inner ring lamina teeth, and being separated from the adjacent second inner ring lamina teeth by respective second inner ring lamina slots, wherein the second inner ring lamina slots each comprise a widened second inner ring lamina slot formation proximal to the respective second inner ring lamina material bridge;
stamping a plurality of third inner ring lamina, each of the third inner ring lamina comprising a plurality of radially projecting third inner ring lamina teeth, each third inner ring lamina tooth being connected to adjacent third inner ring lamina teeth by respective third inner ring lamina material bridges at radially inner ends of the third inner ring lamina teeth, and being separated from the adjacent third inner ring lamina teeth by respective third inner ring lamina slots, wherein the third inner ring lamina material bridge is of greater radial thickness than the material second inner ring lamina bridge, and wherein the third inner ring lamina slots each comprise a widened third inner ring lamina slot formation proximal to the respective third inner ring lamina material bridge;
stacking the plurality of first inner ring lamina along an axial direction of the stator to form the first section of the inner ring of the stator;
stacking a first plurality of second inner ring lamina at a first axial end of the plurality of first inner ring lamina and stacking a second plurality of second inner ring lamina at a second axial end of the plurality of first inner ring lamina; and
stacking a first plurality of third inner ring lamina at an axially outer end of the first plurality of second inner ring lamina and stacking a second plurality of third inner ring lamina at an axially outer end of the second plurality of second inner ring lamina.

14. A method of manufacture of a stator according to claim 13, comprising:
overlaying at least a portion of each of the radially projecting first inner ring lamina teeth with a portion of a respective radially projecting second inner ring lamina tooth and a portion of a respective radially projecting third inner ring lamina tooth to form axially extending stator winding slots and corresponding axially extending teeth of the inner ring.

15. A method of manufacture of a stator according to claim 14, comprising:
stamping a plurality of outer ring lamina, the outer ring lamina configured to be located at the radially outer ends of the teeth of the inner ring.
